(19) Europäisches Patentamt
European Patent Office
Office européen des brevets

(11) **EP 3 438 448 B1**

(12) **FASCICULE DE BREVET EUROPEEN**

(45) Date de publication et mention de la délivrance du brevet:
**27.03.2024 Bulletin 2024/13**

(21) Numéro de dépôt: **18182318.8**

(22) Date de dépôt: **06.07.2018**

(51) Classification Internationale des Brevets (IPC):
**F03D 7/04** *(2006.01)*  **F03D 7/02** *(2006.01)*
**H02J 3/38** *(2006.01)*  **G05B 13/04** *(2006.01)*

(52) Classification Coopérative des Brevets (CPC):
**G05B 13/042; F03D 7/0204; F03D 7/028;**
**F03D 7/046; F03D 7/048; H02J 3/381; H02J 3/472;**
F05B 2270/20; F05B 2270/204; F05B 2270/32;
F05B 2270/321; F05B 2270/329; F05B 2270/335;
H02J 2300/28; Y02E 10/72;                          (Cont.)

(54) **PILOTAGE D'UN PARC ÉOLIEN**

STEUERUNG EINES WINDPARKS

WIND FARM CONTROL

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **31.07.2017 FR 1757320**

(43) Date de publication de la demande:
**06.02.2019 Bulletin 2019/06**

(73) Titulaire: **Electricité de France**
**75008 Paris (FR)**

(72) Inventeurs:
• **GIONFRA, Nicolo**
**75018 Paris (FR)**
• **FAILLE, Damien**
**78100 Saint-Germain-en-Laye (FR)**
• **LOEVENBRUCK, Philippe**
**92350 Le Plessis Robinson (FR)**
• **SANDOU, Guillaume**
**91470 Pecqueuse (FR)**
• **SIGUERDIDJANE, Houria**
**91192 Gif-sur-Yvette (FR)**

(74) Mandataire: **Plasseraud IP**
**66, rue de la Chaussée d'Antin**
**75440 Paris Cedex 09 (FR)**

(56) Documents cités:
**US-A1- 2013 300 115**

• **EBEGBULEM JUDITH, GUAY MARTIN:**
**"Distributed Extremum Seeking Control for Wind**
**Farm Power Maximization", IFAC 2017**
**PROCEEDINGS, vol. 50, no. 1, 16 juillet 2017**
**(2017-07-16), pages 147-152, XP002779500, DOI:**
**10.1016/j.ifacol.2017.08.025**
• **PARK JINKYOO ET AL: "A data-driven,**
**cooperative wind farm control to maximize the**
**total power production", APPLIED ENERGY,**
**ELSEVIER SCIENCE PUBLISHERS, GB, vol. 165,**
**31 décembre 2015 (2015-12-31), pages 151-165,**
**XP029400213, ISSN: 0306-2619, DOI:**
**10.1016/J.APENERGY.2015.11.064**
• **MENON ANUP ET AL: "Collaborative extremum**
**seeking for welfare optimization", 53RD IEEE**
**CONFERENCE ON DECISION AND CONTROL,**
**IEEE, 15 décembre 2014 (2014-12-15), pages**
**346-351, XP032733839, DOI:**
**10.1109/CDC.2014.7039405 ISBN:**
**978-1-4799-7746-8 [extrait le 2015-02-11]**
• **TIAN J ET AL: "Active power dispatch method for**
**a wind farm central controller considering wake**
**effect", IECON 2014 - 40TH ANNUAL**
**CONFERENCE OF THE IEEE INDUSTRIAL**
**ELECTRONICS SOCIETY, IEEE, 29 octobre 2014**
**(2014-10-29), pages 5450-5456, XP032739043,**
**DOI: 10.1109/IECON.2014.7049333**

**(Cont. page suivante)**

(52) Classification Coopérative des Brevets (CPC):
(Cont.)
Y02E 10/76

**Description**

L'invention relève du domaine du pilotage de parcs éoliens, en particulier de parcs éoliens pour lesquels les effets de sillage sont significatifs. US 2013/300115 traite de sujets connexes.

L'effet de sillage apparaît lorsque plusieurs éoliennes se trouvent sensiblement alignées les unes avec les autres selon la direction du vent. Lorsqu'il est tenu compte des effets de sillage pour leur pilotage, on dit que les éoliennes coopèrent. Les solutions de pilotage proposées ici visent à augmenter la puissance extraite du vent en tenant compte des effets de sillage. Par conséquent, les solutions proposées trouvent des applications particulièrement avantageuses pour les parcs éoliens comprenant un grand nombre d'éoliennes, notamment au large (« *off-shore* »), et dont les éoliennes sont de type à calage de pales commandable (« *variable-pitch* ») et à vitesse de rotation commandable (« *variable-speed* »). Le parc Horn Rev, situé au large du Danemark, constitue un exemple d'un tel parc éolien.

Une problématique classique des parcs éoliens est de maximiser la puissance extraite du vent. Pour ce faire, Il est connu de régler l'angle de lacet $\gamma$ d'une éolienne (ou angle de « *yaw* »), généralement pour orienter la nacelle sensiblement face au vent. Il est en outre connu de jouer sur la valeur du facteur d'induction axiale $\alpha$, ce dernier étant lui-même réglé en pilotant de manière combinée le calage des pales $\vartheta$ (ou angle de pitch $\vartheta$) et la vitesse de rotation des pales $\omega$.

Chaque parc éolien présente un point de production maximum théorique (ou MPP pour « *Maximum Power Point* ») qui dépend notamment de la vitesse du vent. Habituellement, les éoliennes sont pilotées en mode MPPT, pour « *maximum powerpoint tracking* ».

La convergence vers le MPP est, par exemple, obtenue par une première catégorie de méthodes comprenant l'application d'algorithmes basés sur le principe du gradient. Dans des situations pour lesquelles les effets de sillage sont conséquents (non négligeables), une telle méthode permet d'atteindre des MPP locaux et non nécessairement le MPP global du parc. Appliquer une telle méthode pour piloter des éoliennes soumis aux effets de sillage conduit à un fonctionnement sous-optimal, parfois qualifié de « *greedy* » dans la littérature.

Il existe une deuxième catégorie de méthodes dites « d'optimisation globale » ou « heuristiques ». De telles méthodes sont souvent assimilées à un problème d'optimisation non-convexe. Elles sont basées sur des modèles analytiques, notamment le modèle de la puissance d'un parc et un modèle d'effet de sillage. De telles méthodes ne permettent pas de garantir une convergence stricte vers le MPP global mais donnent des solutions qui s'en approchent. Un exemple d'une telle méthode est appelée « *Particle Swarm Optimization* (PSO) ». Cet exemple est décrit dans « J. Tian, C. Su, M. Soltani, and Z. Chen, "Active power dispatch method for a wind farm central controller considering wake effect", in Industrial Electronics Society, IECON 2014-40th Annual Conférence of the IEEE, IEEE, 2014, pp. 5450-5456 ».

Une troisième catégorie de méthodes existe, dites d'apprentissage sans modèle. Dans ces cas, les différentes combinaisons de paramètres sont testées (par simulation ou sur site) en faisant varier chaque paramètre par pas successif d'un algorithme. Des exemples de telles méthodes sont donnés dans « J. Park and K. H. Law, "A data-driven, cooperative wind farm control to maximize the total power production", Applied Energy, vol. 165, pp. 151-165, 2016 ». Certaines combinaisons de paramètres sont en pratique aberrantes ou dangereuses pour la sécurité des installations. Tester de telles valeurs par simulation consomme inutilement du temps et des ressources. Interdire certaines combinaisons lors d'essais sur site (par exemple pour des raisons de sécurité) limite l'exploration des combinaisons. De telles méthodes présentent en outre des temps de convergence particulièrement longs.

Les méthodes théoriques connues, notamment des deuxièmes et troisièmes catégories, ignorent certaines contraintes (physiques ou pratiques), ce qui en limite l'efficacité et/ou l'applicabilité. Dans les méthodes connues, il est par exemple considéré, parfois de manière implicite, que les résolutions de problèmes d'optimisation sont immédiates et que les commandes peuvent être transmises sans latence et de manière concomitante à chacune des éoliennes d'un parc. Cela ne correspond pas à la réalité. Par exemple, la complexité des problèmes d'optimisation augmente rapidement avec le nombre d'éoliennes qui coopèrent. Ainsi, les ressources et temps de calcul nécessaires augmentent aussi avec le nombre d'éoliennes qui coopèrent. Les ressources et temps de calcul nécessaires pour mettre en oeuvre les méthodes connus sont parfois incompatibles avec un pilotage en temps réel de vastes parcs éoliens. Autrement dit, les temps de calcul pour faire converger les algorithmes et obtenir une solution sont parfois trop importants au regard de la dynamique des phénomènes physiques en jeu (variation de l'orientation et de la vitesse du vent, inertie des organes mécanique des éoliennes, etc.).

En outre, la plupart des méthodes de pilotage sont conçues pour être mises en oeuvre de manière centralisée : un unique module de calcul central pilote l'ensemble des éoliennes du parc. Un réseau de communication centralisé est donc nécessaire, ce qui est coûteux. La charge du réseau de communication est importante. Une telle architecture est peu modulable : ajouter, retirer ou déplacer une éolienne d'un parc existant est complexe. Un tel parc présente un point de défaillance unique. L'architecture est non-résiliente et la fiabilité du parc s'en trouve dégradée.

L'invention vient améliorer la situation.

Il est proposé un procédé de commande d'un parc d'éoliennes selon la revendication 1.

Les opérations de calcul mises en oeuvre dans le procédé sont simples. Le procédé peut donc être décomposé en plusieurs opérations décentralisées. Des moyens de calculs de faible puissance peuvent être suffisants pour mettre en oeuvre différentes parties des calculs d'optimisation. Par exemple, des équipements usuels du commerce peuvent être suffisants. Les opérations à mettre en oeuvre peuvent être implémentées sur les cartes de microprocesseurs des automates usuellement présents dans les éoliennes. Ainsi, le procédé peut être mis en oeuvre en parallèle par chaque éolienne du parc. Des paramètres externes tels que des contraintes imposées par le gestionnaire du réseau en aval peuvent être prises en compte. Les charges de calcul et de communication sont réduites par rapport à des méthodes pour lesquelles les calculs sont centralisés. Des éoliennes peuvent être ajoutées, retirées et/ou déplacées sans adaptation particulière du système en place. En cas de défaillance locale, le parc peut rester fonctionnel.

Selon un autre aspect, il est proposé un système d'au moins deux éoliennes, chacune équipée d'un ensemble de moyens informatiques agencés pour coopérer les uns avec les autres et mettre en oeuvre le procédé proposé.

Selon un autre aspect, il est proposé un programme d'ordinateur apte à être mis en oeuvre en un procédé de commande d'un ensemble d'éoliennes tel que défini dans les présentes. Selon encore un autre aspect, il est proposé un support d'enregistrement non transitoire lisible par un ordinateur sur lequel est enregistré un programme comprenant des instructions pour la mise en oeuvre d'un procédé proposé dans les présentes.

Les caractéristiques suivantes peuvent, optionnellement, être mises en oeuvre. Elles peuvent être mises en oeuvre indépendamment les unes des autres ou en combinaison les unes avec les autres :

- La détermination des groupes est réalisée en fonction d'un paramètre d'interaction réglable commun à l'ensemble du parc. Le choix de la valeur dudit paramètre permet à un opérateur de régler un compromis entre un niveau de qualité d'optimisation et une vitesse de convergence de l'algorithme. Cela permet d'adapter le procédé à la plupart des parcs éoliens, y compris un parc éolien existant dans lequel des éoliennes sont ajoutées supprimées ou déplacées.

- Le procédé comprend en outre la génération d'un signal de commande de l'orientation de lacet de chaque éolienne. Le signal est généré en fonction de l'orientation du vent, de sorte que chaque éolienne s'oriente sensiblement face au vent et indépendamment des résultats de l'algorithme d'optimisation. Commander l'orientation de lacet des éoliennes indépendamment des résultats de l'optimisation permet de simplifier les opérations de calcul, et donc d'accélérer la convergence des algorithmes. Les mouvements de lacet des éoliennes pour s'aligner face au vent sont généralement plus longs que les adaptations de calage de pales. Adapter l'orientation en fonction de la direction du vent sans attendre la convergence des algorithmes permet donc d'améliorer la dynamique du pilotage et donc l'efficience du parc éolien.

- La mise en oeuvre de l'algorithme inclut la mise en oeuvre d'un modèle de puissance du parc et d'un modèle de l'effet de sillage. Le procédé proposé n'est pas limité à un modèle de puissance particulier ou à un modèle d'effet de sillage particulier. Au contraire, le procédé est compatible avec la plupart des modèles existants. Ainsi, d'autres modèles que ceux décrits en détails peuvent être implémentés sans difficulté particulière. Des modèles de puissance et/ou d'effet de sillage adaptés à des parcs éoliens particuliers peuvent être implémentés dans le procédé. Le procédé présente une grande adaptabilité.

- Le procédé comprend en outre l'attribution à chaque éolienne d'une valeur cible de puissance électrique à fournir en sortie équivalente à la plus faible des valeurs parmi la puissance électrique nominale en sortie de ladite éolienne et le quotient de la puissance électrique maximale à fournir en sortie du parc par le nombre d'éoliennes de l'ensemble. Ceci permet d'identifier un signal de commande optimisé, tenant compte de contraintes externes telles que la puissance électrique maximum à fournir sur le réseau en sortie du parc, dès la mise en oeuvre des algorithmes. Il n'est pas nécessaire de filtrer *a posteriori* les solutions possibles en fonction des contraintes externes.

D'autres caractéristiques, détails et avantages de l'invention apparaîtront à la lecture de la description détaillée ci-après, et à l'analyse des dessins annexés, sur lesquels :

- la figure 1 montre un graphique illustrant des limites de méthodes connues,
- la figure 2 montre une cartographie illustrant des limites de méthodes connues,
- la figure 3 montre un schéma de deux éoliennes coopérant par effet de sillage,
- la figure 4 montre un schéma d'implantation d'un parc éolien,
- la figure 5 montre une comparaison entre un graphe de communication complet (à gauche) et un graphe de communication simplifié (à droite) rendu suffisant par l'invention,
- la figure 6 montre un schéma illustrant la notion de voisin au sens de l'effet de sillage,
- la figure 7 montre une représentation visuelle des particules au sens de l'invention,
- la figure 8 montre une représentation d'échanges de données entre des éoliennes d'un parc, et

- la figure 9 montre un diagramme fonctionnel d'un mode de réalisation de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans la suite, une partie algorithmique du procédé est mis en oeuvre de manière distribuée par des ensembles de moyens informatiques distincts les uns des autres. Un ensemble de moyens informatiques vise par exemple un assemblage opérationnel d'au moins un processeur et d'une mémoire. Par exemple, un tel ensemble forme un module de calcul. Il est en outre fait mention de « communication entre éoliennes ». Cela sera interprété au sens de « communications entre des modules de communication, chacun associé à une éolienne respective ». Le terme « éolienne » est employé au sens général d'une installation apte à convertir l'énergie cinétique du vent en une énergie électrique. Le terme « éolienne » ne saurait être interprété de manière limitative comme désignant uniquement les organes mécaniques de l'installation. Par exemple, chaque éolienne du parc forme une entité parmi plusieurs, l'ensemble des éoliennes constituant le parc. Chaque éolienne peut être équipé notamment d'une structure mécanique, d'un module de calcul, d'un module de communication et d'un module de commande apte piloter la structure mécanique.

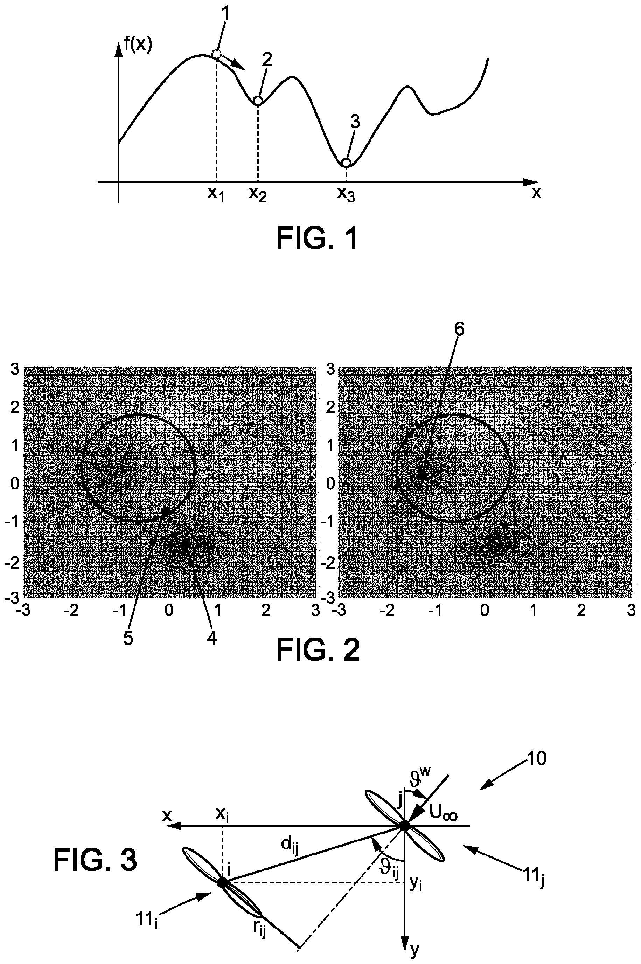

Les figures 1 et 2 sont des représentations génériques d'un problème d'optimisation. En figure 1, la courbe représentant une valeur f(x) dépendant d'un unique paramètre x (fonction de dimension 1) est *a priori* inconnue. Seules les valeurs de $x_1$ et de $f(x_1)$ représentées par le point 1 initial sont connues. On cherche ici à déterminer la valeur de x pour laquelle f(x) est minimum. La technique des gradients permet de déterminer qu'en augmentant la valeur de x à partir de $x_1$, il est possible de réduire la valeur de f(x) jusqu'à un minimum correspondant au point 2. Les algorithmes fonctionnant par gradient permettent d'identifier le point 2. Or, comme cela apparaît sur la figure 1, le point 2 représente seulement un minimum local pour f(x). Le paramètre $x_2$ permettant d'atteindre $f(x_2)$ n'est pas la meilleure solution. En réalité, il existe une valeur $x_3$ pour laquelle $f(x_3)$ représente le minimum global de la fonction f(x) tel que cela est représenté par le point 3 sur la figure 1. Le minimum global peut ne pas être identifié par les algorithmes fonctionnant par gradient.

La figure 2 illustre une limite analogue des algorithmes par gradient pour une fonction de dimension 2. L'abscisse et l'ordonnée représentent chacune un des deux paramètres d'une fonction tandis que la valeur de la fonction est représentée par des variations de contraste. Le rond noir délimite une zone acceptable, c'est-à-dire une contrainte indépendante de la fonction qui limite les combinaisons de paramètres possibles à celles situées dans le cercle. En partie gauche, le point 4 représente un optimum ne respectant pas les contraintes. Le point 5 représente une valeur respectant les contraintes et déduite par application d'algorithmes de type gradient à partir du point 4 initial. Comme le montre la partie droite de la figure 2, il existe une meilleure solution, c'est-à-dire un optimum global différent du point 5 et représenté par le point 6. L'optimum global n'est, dans ce cas, pas identifié par les algorithmes de type gradient. Le couple de paramètres obtenu par la méthode des gradients (le point 5) est sous-optimal.

Une partie d'un parc éolien 10 comprenant une pluralité d'éoliennes 11 est représentée en figure 3. Les éoliennes $11_i$ et $11_j$ coopèrent. Les positions des éoliennes sont assimilées à un point de référence, par exemple un point de l'axe de rotation du rotor. En extrayant l'énergie cinétique du vent, l'éolienne $11_j$ cause une réduction de la vitesse du vent dans le sillage en aval de l'éolienne $11_j$. Par conséquent, l'éolienne $11_i$ placée dans le sillage est assujettie à une réduction de la puissance disponible du vent. Dans un référentiel planaire tel que représenté en figure 3, la position de chaque éolienne $11_a$ peut être représenté par un couple de coordonnées $x_a$, $y_a$. Sur la figure 3 sont représentées :

- $u_\infty$, le vecteur représentatif de la vitesse du vent,
- $\vartheta^w$, l'angle orienté entre l'orientation du vent et une direction de référence, correspondant ici à la direction verticale y sur la figure 3,
- $d_{i,j}$, la distance séparant les points de référence respectifs des deux éoliennes $11_i$ et $11_j$
- $\vartheta_{i,j}$, l'angle orienté entre l'axe reliant les points de référence respectifs des deux éoliennes $11_i$ et $11_j$ et la direction de référence, et
- $r_{i,j}$, la distance séparant les axes de rotation respectifs des deux éoliennes $11_i$ et $11_j$ lorsqu'elles sont orientées faces au vent.

Ici, les propriétés du vent, notamment la vitesse du vent $u_\infty$ et son orientation définie par l'angle $\vartheta^w$, sont obtenus par le calcul d'une moyenne à partir de données de mesures, ou bien sont filtrées par un filtre à moyenne mobile. Ainsi, les valeurs évoluent lentement par rapport aux dynamiques du système. Cela permet de considérer les contraintes et d'assimiler le problème d'optimisation du pilotage à résoudre à un problème statique. Les données de mesure de la vitesse et de l'orientation du vent peuvent être obtenues au moyen d'anémomètres répartis dans le parc 10 et de manière connue en soit.

Il va maintenant être décrit un modèle de l'effet de sillage mis en oeuvre dans certains au moins des modes de réalisation du procédé. Selon le modèle proposé ici, deux variables de contrôle de chaque éolienne $11_i$ sont réglables :

- l'angle de lacet (ou « *yaw* ») $\gamma_i$, c'est-à-dire l'angle entre l'axe de rotation du rotor (perpendiculaire au plan de rotation des pales de l'éolienne 11) et la direction du vent définie par l'angle $\vartheta^W$, et
- le facteur d'induction axial $\alpha_i$, avec

$$\alpha_i = \frac{u_i - u_{R,i}}{u_i},$$

où $u_i$ est la vitesse du vent devant l'éolienne $11_i$, et
$u_{R,i}$ est la vitesse du vent dans le plan de rotation du rotor de l'éolienne $11_i$.

La limite théorique du facteur d'induction axial $\alpha$ est $\frac{1}{3}$, et correspond à l'extraction maximale de puissance du vent, c'est-à-dire le MPP. Le facteur d'induction axiale $\alpha$ est lié à la quantité d'énergie cinétique extraite du vent. La puissance extraite du vent par l'éolienne $11_i$ est fonction des variables mentionnées, selon l'équation (I) suivante :

$$P_i = \frac{1}{2} \rho \pi R^2 u_i^3 (\boldsymbol{\alpha}, \boldsymbol{\gamma}) C_p(\alpha_i, \gamma_i) \ (I)$$

Où $\rho$ est la densité de l'air,
R est le rayon du rotor,
$C_p$ est le coefficient de puissance, fonction des variables de contrôle de l'éolienne 11;.

La vitesse $u_i$ du vent devant l'éolienne $11_i$ est, *a priori* du fait de l'effet de sillage, fonction de toutes les variables de contrôle du parc éolien 10, soit $\alpha = (\alpha_1, \dots , \alpha_N)$, et $\gamma = (\gamma_1, \dots \gamma_N)$, où N est le nombre d'éoliennes 11 du parc 10. Les fonctions $u_i(\alpha, \gamma)$, avec $i = 1, \dots , N$, décrivent comment chaque vitesse de vent $u_i$ dépend des points de fonctionnement des éoliennes 11 du parc 10, et représentent un modèle de l'effet de sillage. Un tel modèle est tiré de celui décrit dans « Park and K. H. Law, "Cooperative wind turbine control for maximizing windfarm power using sequential convex programming", Energy Conversion and Management, vol. 101, pp. 295-316, 2015 » que le lecteur est invité à consulter.
En variante, le modèle décrit ici peut être remplacé par un autre modèle représentatif de l'effet de sillage.
Dans le présent contexte, on souhaite maîtriser la puissance extraite du vent sous forme d'énergie cinétique et injectée dans un réseau électrique en sortie du parc 10. Il convient à la fois de maximiser la puissance extraite en respectant des contraintes de puissance nominale $P_n$ de chaque éolienne (contraintes physiques) et de respecter la contrainte de puissance maximale $P_{max}^{tot}$ à injecter dans le réseau électrique. Ici, la puissance nominale est référencée de manière générique $P_n$ pour toutes les éoliennes 11 du parc 10 car toutes les éoliennes 11 sont analogues et présentent des caractéristiques intrinsèques identiques aux défauts près. Il est donc considéré que la puissance nominale est identique pour chacune des éoliennes 11 du parc 10. En variante, des puissances nominales propres à chaque éolienne d'un parc peuvent être prévues. La contrainte de puissance maximale $P_{max}^{tot}$ est généralement imposée par le gestionnaire du réseau électrique en aval du parc. La valeur d'une telle contrainte varie avec le temps. Elle est généralement constante pendant des durées longues par rapport à la dynamique du pilotage des éoliennes. Le problème peut prendre la forme de la recherche de :

$$\max_{(\alpha, \gamma)} \sum_{i=1}^{N} P_i(\boldsymbol{\alpha}, \boldsymbol{\gamma})$$

tout en respectant les deux inéquations suivantes :

$$P_i(\boldsymbol{\alpha}, \boldsymbol{\gamma}) \leq P_n, i = 1, \dots , N \qquad (II)$$

$$\sum_{i=1}^{N} P_i(\boldsymbol{\alpha}, \boldsymbol{\gamma}) \leq P_{max}^{tot} \quad (III)$$

Dans les procédés proposés ici, la résolution des problèmes combinés ci-dessus peut être mise en oeuvre de façon distribuée par plusieurs ensembles de moyens informatiques, par exemple des unités de commande distinctes les unes des autres, et chacun équipé d'un processeur. Par exemple, chacune des unités de commande est associée à une éolienne 11 respective. Dans ce cas, le parc 10 peut être dispensé de contrôleur central. Contrairement aux problèmes d'optimisation traités dans la plupart des méthodes de la littérature, il est tenu compte des contraintes de puissance nominale $P_n$ et de puissance maximale $P_{max}^{tot}$ dès les opérations de calcul, et non par filtrage ultérieur parmi une pluralité de solutions.

Dans les exemples décrits ici, la gestion du parc éolien est distribuée. Chaque éolienne 11 est équipée d'un module de commande et d'un module de communication apte à communiquer avec les modules de communication d'autres éoliennes.

Chaque éolienne 11 communique avec toutes les éoliennes 11 qu'elle influence de manière non négligeable par effet de sillage. Pour chaque direction de vent $\vartheta^W$, et pour chaque éolienne 11, un groupe de plusieurs éoliennes voisines 11 avec lesquelles il est nécessaire de communiquer peut être identifié. Si une première éolienne est absente du groupe d'une seconde éolienne et *vice versa,* alors il est inutile que les deux éoliennes puissent communiquer l'une avec l'autre. Ainsi, pour une direction de vent $\vartheta^W$ donnée, le réseau de communications inter-éoliennes du parc 10 peut prendre la forme de plusieurs sous-réseaux.

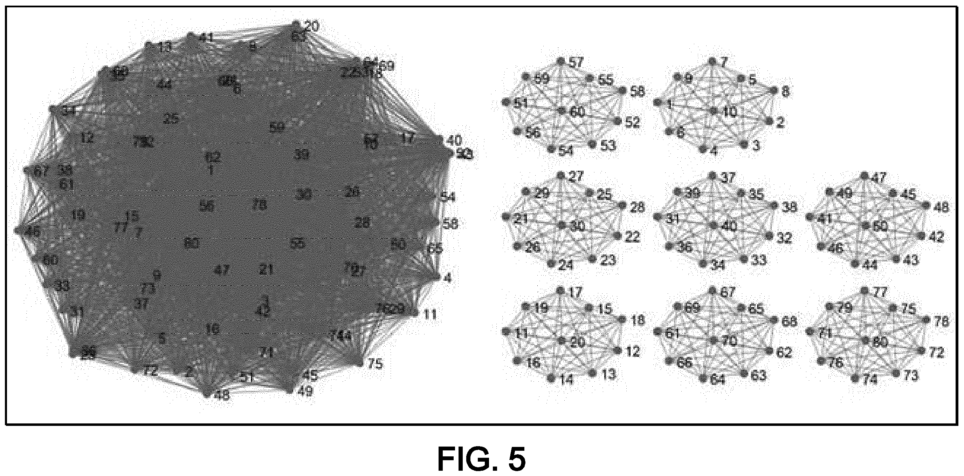

La figure 5 illustre un graphe de communication complet, c'est-à-dire que chaque éolienne communique avec chaque autre éolienne (à gauche de la figure 5), comparé à un graphe de communication strictement nécessaire pour une orientation du vent fixée (à droite de la figure 5). La partie droite de la figure 5 constitue un cas particulier en ce que les sous-réseaux sont distincts les uns des autres. En variante, les sous-réseaux sont en partie superposés les uns aux autres.

Chaque éolienne 11 est capable d'identifier le groupe d'éoliennes avec lesquelles elle est aérodynamiquement couplée, c'est-à-dire son voisinage. Chaque éolienne établit une communication avec les éoliennes voisines. Ainsi, les éoliennes 11 du parc 10 coopèrent les unes avec les autres pour maximiser la puissance extraite du vent tout en considérant les contraintes précitées.

Dans les exemples décrits ici, le modèle théorique de l'effet de sillage correspond à celui décrit dans « Park and K. H. Law, "Cooperative wind turbine control for maximizing windfarm power using sequential convex programming", Energy Conversion and Management, vol. 101, pp. 295-316, 2015 ». Un tel modèle a montré une bonne corrélation avec les observations des phénomènes physiques sur le parc Horn Rev au large du Danemark. Le modèle théorique de l'effet de sillage peut être différent, par exemple adapté au parc éolien, par exemple en fonction de propriétés mécaniques des modèles d'éoliennes mis en oeuvre, de l'implantation mutuelle des éoliennes, ou encore en fonction des conditions météorologiques usuelles observées. Le modèle choisi peut être continu et basé sur des équations différentiables tel que le modèle du gradient. Néanmoins, le procédé proposé ici est aussi compatible avec des modèles non continus et/ou basés sur des équations non différentiables tels que le modèle cité ci-avant.

Le modèle choisi étant utilisé dans le contexte d'un procédé de type heuristique, le modèle peut être dépourvu de forme analytique. En combinant l'utilisation d'un modèle, analytique ou non, et d'une méthode heuristique mise en oeuvre de façon distribuée, la convergence vers une solution est particulièrement rapide. Le procédé est donc particulièrement adapté à un pilotage en temps réel.

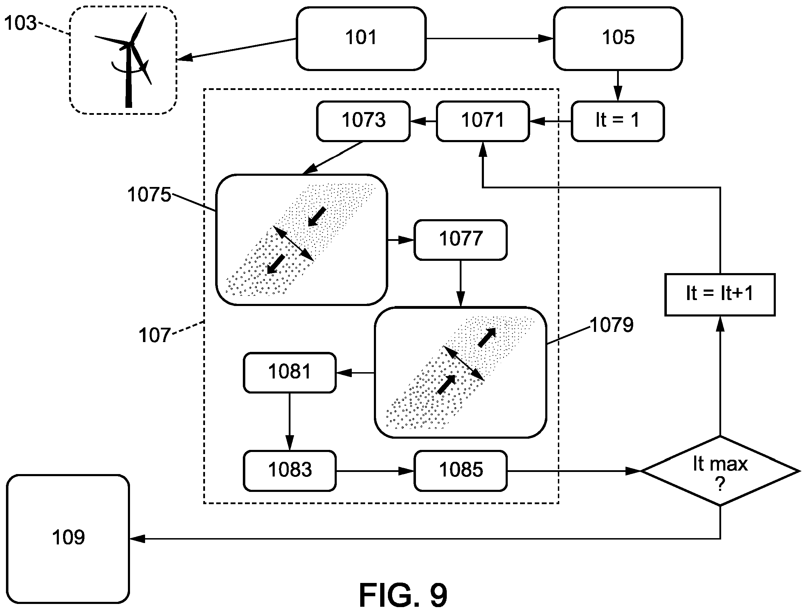

Il est maintenant fait référence à la figure 9 illustrant le déroulement d'un mode de réalisation du procédé. Le procédé qui suit est décrit comme mis en oeuvre par une éolienne 11. Le procédé peut être mis en oeuvre concomitamment par chaque module de commande de chaque éolienne 11 du parc 10.

Dans une opération 101, l'éolienne $11_i$ reçoit en entrée les données suivantes :

-    les positions de chacune des éoliennes 11 du parc 10, par exemple sous la forme d'un jeu de coordonnées ($x_i$, $y_i$), avec i = 1 ... N,
-    la vitesse $u_i$ du vent en amont de l'éolienne $11_i$,
-    la direction du vent sur le parc 10, par exemple sous la forme d'un angle orienté $\vartheta^W$,
-    le modèle de sillage à mettre en oeuvre, par exemple celui précitée.
-    la puissance nominale de l'éolienne 11, par exemple sous la forme d'une valeur commune $P_n$ à toutes les éoliennes 11, et
-    la puissance maximale $P_{max}^{tot}$ du parc 10, par exemple sous la forme d'une consigne transmise par un gérant du réseau électrique en aval du parc 10.

Parmi lesdites données, certaines peuvent être mémorisées de manière durable tandis que les autres sont mises à jour régulièrement. Par exemple l'éolienne $11_i$ peut recevoir seulement des données actualisées relatives à la vitesse et à l'orientation du vent, et à la puissance maximale en sortie du parc. Il peut être attribué à chaque éolienne

$11_i$ une valeur cible de puissance électrique à fournir en sortie. Cette valeur est par exemple équivalente à la plus faible des valeurs parmi la puissance électrique nominale en sortie $P_n$ de ladite éolienne 11; et le quotient de la puissance électrique maximale $P_{max}^{tot}$ à fournir en sortie du parc 10 par le nombre N d'éoliennes de l'ensemble du parc 10. Lorsque la puissance électrique maximale $P_{max}^{tot}$ à fournir en sortie du parc 10 est inférieure à N fois la puissance électrique nominale moyenne de chaque éolienne 11, alors la limite maximale de puissance en sortie de chaque éolienne peut être fixée non plus à la puissance nominale $P_n$ mais à $P_{max}^{tot}/N$.

Dans une opération 103, optionnelle, un signal de commande est généré de sorte que le rotor de l'éolienne 11 soit orienté face au vent (en fonction de l'angle orienté $\vartheta^W$). Dans le cas où l'orientation courante de l'éolienne 11 correspond déjà à une orientation face au vent, aucun signal de commande n'est généré : l'éolienne 11 reste face au vent sans qu'il soit nécessaire d'effectuer un mouvement de rotation de la nacelle (lacet ou « *yaw* »). Dans des variantes, les opérations suivantes sont effectuées indépendamment de l'orientation de l'éolienne. Dans le modèle de l'effet de sillage utilisé dans les exemples, il est considéré qu'un alignement à $\pm 30°$ près est suffisant à garantir la validité du modèle. Ainsi, l'orientation de chaque éolienne est fixée indépendamment des résultats des calculs d'optimisation décrits ci-après. Ainsi, les mouvements de lacet sont générés seulement en cas de variation importante de l'orientation du vent. La dynamique de l'adaptation de l'orientation des éoliennes est rendues plus lente que celle des autres paramètres. La fatigue et l'usure mécanique de la structure s'en trouve limitée.

Dans une opération 105, dite de calcul du voisinage, les groupes d'éoliennes coopérantes sont identifiés.

Dans un exemple de mise en oeuvre de l'opération 105, une première sous-opération 1051 est mise en oeuvre : un paramètre d'interaction $\varepsilon_{int}$ est fixé.

Théoriquement, toute première éolienne placée en amont d'une deuxième éolienne selon l'orientation du vent influence la deuxième éolienne disposée en aval. En pratique, l'influence diminue lorsque la distance entre la première éolienne et la deuxième éolienne augmente. Ainsi, deux éoliennes dont le couplage aérodynamique est faible ne doivent pas nécessairement communiquer l'une avec l'autre. Le graphe de communication peut encore être réduit : chaque éolienne 11 peut communiquer seulement avec les éoliennes appartenant au même groupe et physiquement proches.

Le paramètre d'interaction $\varepsilon_{int}$ est équivalent à une distance. Plus sa valeur est élevée, plus les effets de sillage entre éoliennes distantes seront considérés comme importants et plus les calculs menés ci-après sont précis (conformes à la réalité physique). Néanmoins, plus la valeur du paramètre d'interaction $\varepsilon_{int}$ est élevée, plus les calculs sont complexes et donc plus les temps de calcul pour obtenir une convergence sont longs. Ainsi, en jouant sur la valeur du paramètre d'interaction $\varepsilon_{int}$ il est possible de régler un compromis entre précision théorique et temps de calcul. Le paramètre d'interaction $\varepsilon_{int}$ constitue un hyper-paramètre du procédé. Par exemple, le procédé peut être adapté en fonction des ressources en moyen de calcul disponibles et en fonction de la dynamique du pilotage souhaitée.

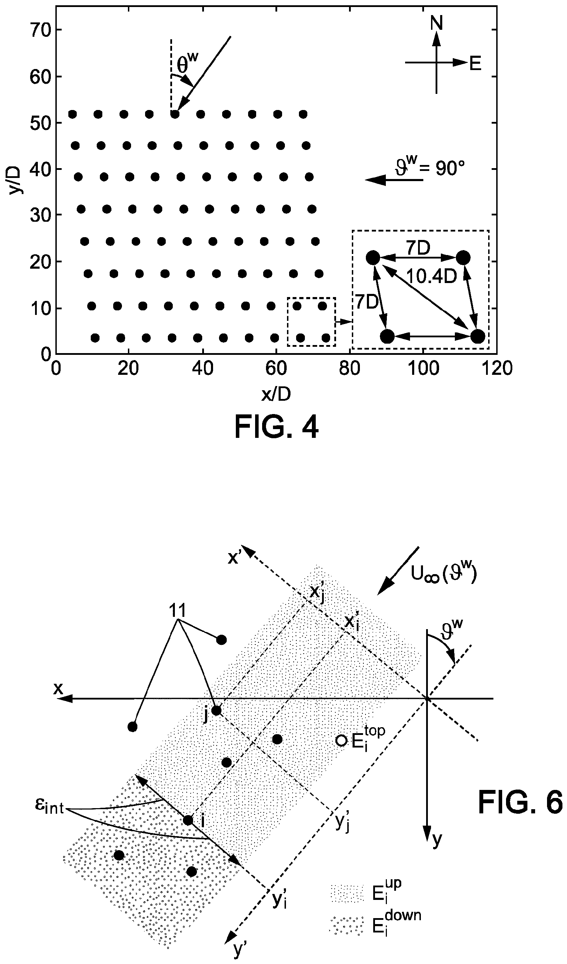

Par exemple, le paramètre d'interaction $\varepsilon_{int}$ peut être défini comme une distance selon la direction du vent, comme une distance selon la direction transversale à la direction du vent ou encore comme une combinaison des deux. Dans l'exemple proposé ici et représenté en figure 6, on souhaite proposer un procédé de pilotage dans lequel l'optimisation inclut la prise en compte de contraintes (les puissances à ne pas dépasser). Le paramètre d'interaction $\varepsilon_{int}$ est, ici, défini comme une distance selon la direction transversale à la direction du vent. Cela facilite la convergence des algorithmes. Ainsi, pour une direction de vent donnée, $\varepsilon_{int}$ définit pour chaque éolienne 11 un couloir d'interaction s'étendant selon la direction du vent et de largeur égale au double de la valeur de $\varepsilon_{int}$. Toute éolienne 11 située dans le couloir relatif à l'éolienne $11_i$ est considéré comme étant une éolienne voisine de l'éolienne $11_i$. Une communication doit pouvoir être établie entre chaque éolienne 11 et ses éoliennes voisines. Dans des variantes, notamment lorsqu'il n'est pas tenu compte de contraintes externes telles que les puissances à fournir, alors le paramètre d'interaction $\varepsilon_{int}$ peut être défini comme une combinaison d'une distance longitudinale et d'une distance transversale par rapport à la direction du vent.

Étant fonction de la direction du vent, le paramètre d'interaction $\varepsilon_{int}(\vartheta^W)$ peut être défini par une table (« *lookup table* »), par exemple stockée dans une mémoire accessible au module de commande de l'éolienne 11. À chaque éolienne 11 peut correspondre une table distincte de celle des autres éoliennes. Dans l'exemple décrit ici, et en particulier lorsque les parcs 10 présentent une implantation régulière des éoliennes 11 les unes par rapport aux autres, une table identique pour chaque éolienne 11 peut être mise en oeuvre.

Dans un mode de réalisation, $\varepsilon_{int}$ est réglé après des essais par simulation, c'est-à-dire en simulant son influence sur le résultat de l'optimisation. Dans des situations complexes, un réglage fin de $\varepsilon_{int}$ permet de satisfaire des contraintes de puissance. Par exemple, un premier réglage du paramètre $\varepsilon_{int}$ est obtenu en simulant la mise en oeuvre du procédé pour une valeur élevée de la vitesse du vent $u_\infty$, par exemple 17 m.s$^{-1}$. Ainsi, les contraintes du système sont actives (les risques que les puissances en sortie dépassent les limites nominales sont élevés).

Pour diverses orientations du vent $\vartheta^W$ dans la plage des valeurs possibles, l'algorithme est simulé en partant d'une valeur de $\varepsilon_{int}$ faible (par exemple R), puis la valeur est augmentée jusqu'obtenir des résultats pour lesquels les contraintes de puissance nominale sont respectées.

Un deuxième réglage plus fin peut être mis en oeuvre en fixant une valeur assez faible de la vitesse du vent $u_\infty$ (par exemple 7 m.s$^{-1}$). Ainsi, les contraintes du système sont, au contraire du premier réglage, inactives (les risques que les puissances en sortie dépassent les limites nominales sont faibles, voir nulles). Pour diverses orientations du vent $\vartheta^W$, par exemple les mêmes que la simulation précédente, l'algorithme est simulé en partant de la dernière valeur retenue de $\varepsilon_{int}$ dans la série de simulations précédentes (à vent fort). Puis, la valeur est augmentée tant que les résultats de la simulation s'améliorent. La dernière valeur de $\varepsilon_{int}$ est retenue pour la mise en oeuvre du procédé. Par des résultats qui s'améliorent, on entend, par exemple, une augmentation de la rapidité de convergence de l'algorithme ou une augmentation de la puissance totale en sortie du parc sans toutefois dépasser les puissances nominales.

Ainsi, pour chaque orientation du vent $\vartheta^W$, le paramètre d'interaction $\varepsilon_{int}$ est fixé. Dans l'exemple décrit ici, une fois fixé, le paramètre d'interaction $\varepsilon_{int}$ n'est plus modifié dans la suite du procédé.

Une fois le paramètre d'interaction $\varepsilon_{int}(\vartheta^W)$ fixé, une deuxième sous-opération 1052 de l'opération 105 est mise en oeuvre : définir les voisinages de chaque éolienne 11 du parc 10.

À partir des implantations relatives des éoliennes 11 du parc 10 $((x_i ; y_i)_{i\in[1 ; N]})$ et du paramètre d'interaction $\varepsilon_{int}(\vartheta^W)$, le voisinage de chaque éolienne peut être déterminé. La figure 4 montre un exemple d'implantation du parc « Horn Rev », sur laquelle la référence D correspond au diamètre du rotor, soit le double du rayon R.

La définition du voisinage pour chaque éolienne 11 en fonction de l'orientation du vent $\vartheta^W$ comprend ici :

- un groupe aval $E_i^{down}$ comprenant les éoliennes voisines de l'éolienne 11$_i$ dont le comportement est influencé par l'éolienne 11$_i$ par effet de sillage. Dans l'exemple décrit ici, le groupe aval $E_i^{down}$ comprend les éoliennes présentes dans un couloir orienté selon la direction du vent $\vartheta^W$, centré sur l'éolienne 11$_i$, de largeur égale au double de $\varepsilon_{int}(\vartheta^W)$ et situées en aval de l'éolienne 11$_i$ selon l'orientation du vent ;
- un groupe amont $E_i^{up}$ comprenant les éoliennes voisines de l'éolienne 11$_i$ dont le comportement influence celui de l'éolienne 11$_i$ par effet de sillage. Dans l'exemple décrit ici, le groupe amont $E_i^{up}$ comprend les éoliennes présentes dans un couloir orienté selon la direction du vent $\vartheta^W$, centré sur l'éolienne 11$_i$, de largeur au double de $\varepsilon_{int}(\vartheta^W)$ et situées en amont de l'éolienne 11$_i$ selon l'orientation du vent ;
- l'éolienne de tête $E_i^{top}$, soit celle située la plus en en amont selon l'orientation du vent parmi les éoliennes du groupe amont $E_i^{up}$. L'éolienne de tête $E_i^{top}$ est considérée comme dépourvue d'éolienne influençant son comportement par effet de sillage.

La définition des voisinages comprend par exemple le calcul de coordonnées pivotées pour chaque éolienne 11 en fonction de l'orientation du vent $\vartheta^W$. En reprenant les notations de la figure 6, cela donne par exemple :

$$x_i' = x_i\cos\vartheta_i - y_i\sin\vartheta_i, \text{ et } y_i' = x_i\sin\vartheta_i + y_i\cos\vartheta_i,$$

et celles des autres éolienne 11$_j$ :

$$x_j' = x_j\cos\vartheta_i - y_j\sin\vartheta_i, \text{ et } y_j'=x_j\sin\vartheta_i + y_j\cos\vartheta_i,$$

avec j = 1,...,N, et j $\neq$ i.

Ci-après est reproduit une partie d'une routine informatique permettant l'identification des voisinages par des moyens informatiques :

$$\textit{Initialisation } dist\_long = y_i' \; ; \; E_i^{top} = i; \; E_i^{up} = \{\, \}; \; E_i^{down} = \{\, \};$$

$$\textit{for } (j = 1 : N) \;\&\&\; (j \neq i)$$

$$\textit{if } |x_i' - x_j'| < \varepsilon_{int}$$

$$\textit{Établir une communication entre } E_i \textit{ et } E_j \; ;$$

$$\textit{if } y_j' < y_i'$$

$$\textit{Ajoute } E_j \textit{ au groupe } E_i^{up} \; ;$$

$$\textit{else}$$

$$\textit{Ajoute } E_j \textit{ au groupe } E_i^{down} \; ;$$

$$\textit{end}$$

$$\textit{if } y_j' < dist\_long$$

$$E_i^{top} = j \; ;$$

$$dist\_long = y_j' \; ;$$

$$\textit{end}$$

$$\textit{end}$$

$$\textit{end}$$

Dans une opération 107, une optimisation par essaim de particules distribuée est mise en oeuvre (ou DPSO pour « *Distributed Particle Swarm Optimization* »).

Un algorithme de DPSO est mis en oeuvre par une pluralité de moyens informatiques déportés aptes à échanger des données les uns avec les autres. Ici, chaque ensemble de moyens informatiques d'une éolienne calcule des paramètres destinés à commander les parties mécaniques de ladite éolienne tout en échangeant des données avec les ensembles de moyens informatiques des autres éoliennes. Des échanges de données entre les éoliennes $11_i$ combinés avec plusieurs itérations de calcul par l'algorithme de DPSO permettent d'obtenir des valeurs de facteur d'induction axiale $\alpha_i$ pour chaque éolienne $11_i$.

Dans l'exemple décrit ici on associe à chaque éolienne $11_i$ un nombre $N_p$ de valeurs possibles d'une variable de commande, c'est-à-dire, ici, le facteur d'induction axiale $\alpha_i$. Ces $N_p$ valeurs sont appelés particules. La $k$ème particule de l'éolienne $11$; est identifiée par la variable $x_k^i$. On définit pour chaque éolienne $11_i$ le vecteur des valeurs de toutes les particules qui lui sont associées $x^i = \{x_1^i, \dots, x_{N_p}^i\}$. L'objectif de la mise en oeuvre de l'algorithme est de faire évoluer la valeur des particules $\boldsymbol{x^i}$ par itérations successives jusqu'à ce qu'elles convergent toutes vers une même valeur, appelée meilleure valeur globale $g^i$ (ou « *global best* »). Pour cela, deux données associées à chacune des particules sont exploitées :

- la meilleure valeur personnelle $p_k^i$ (ou « *personal best* »), et
- la meilleure valeur locale $l_k^i$ (ou « *local best* »).

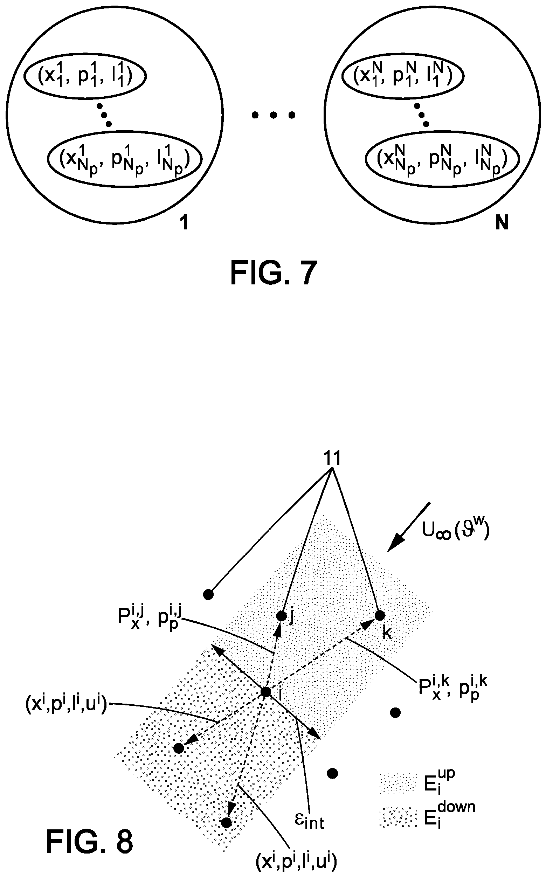

La figure 7 illustre l'organisation des variables des N éoliennes $11_i$ du parc 10.

Au cours des itérations de l'algorithme, le facteur d'induction axiale pour lequel le meilleur résultat est obtenu est mémorisé en $p_k^i$. À l'issue des itérations, on obtient pour chaque éolienne $11_i$ le vecteur $p^i = \{p_1^i, \dots, p_{N_p}^i\}$.

Toute particule $x_k^i$ peut se comparer à un certain nombre d'autres particules $x_l^i$ de la même éolienne $11$; et qui appartient à un voisinage prédéfini Nk. La notion de voisinage appliquée aux particules correspond à la notion de voisinage décrite dans « A. H. Aguirre, A. M. Zavala, E. V. Diharce, and S. B. Rionda, "Copso: Constrained optimization via pso algorithm", Center for Research in Mathematics (CIMAT). Technical report No. I-07-04/22-02-2007, 2007 ». La notion de voisinage appliquée aux particules ne saurait être confondue avec la notion de voisinage des éoliennes 11 les unes par rapport aux autres. En outre on considère le même voisinage pour toute particule ayant même indice k, c'est-à-dire $N_k^i = N_k^j = N_k$ , avec i,j = 1,...,N. En variante, d'autres définitions du voisinage peuvent être mises en oeuvre.

La meilleure valeur locale $l_k^i$ représente la meilleure valeur parmi les $p^i$ associés aux $x^i$ et qui appartiennent au voisinage $N_k$. On définit, pour l'éolienne $11_i$, $l^i = \{l_1^i, ..., l_{N_p}^i\}$ .

Pour pouvoir comparer les particules, les meilleures valeurs personnelles $p_k^i$ et les meilleures valeurs locales $l_k^i$ , doivent être évaluées, distinctement pour chaque éolienne $11_i$, au moyen d'une fonction dite de pertinence (ou « *fitness function* »). Un exemple d'évaluation au moyen d'une fonction de pertinence sera décrit en détail ci-après.

L'opération 107 de mise en oeuvre de l'algorithme DPSO va maintenant être décrite en détail. L'opération 107 peut être décomposée en sous-opérations référencées de 1071 à 1081. Préalablement, un compteur d'itérations est initialisé à 1.

La sous-opération 1071 correspond à une initialisation. La sous-opération 1071 est la première sous-étape d'une boucle de calcul, menée distinctement pour chaque éolienne $11_i$.

Pour l'éolienne $11_i$ du parc 10, les valeurs de ses particules $x^i$ sont fixées aléatoirement dans une plage de valeurs prédéfinie, par exemple ici la plage [0 ; 1/3]. Les meilleures valeurs personnelles $p^i$ et les meilleures valeurs locales $l^i$ sont fixée initialement égale à la valeur de particule $x^i$ ($p^i = x^i$ ; $l^i = x^i$). Le vecteur de vitesses amont du vent est initialisé avec la valeur de la vitesse du vent mesurée, optionnellement moyennée sur une période de temps prédéfinie ou bien après filtrage par un filtre à moyenne mobile tel que décrit ci-avant. Autrement dit, $u^i = \left\{u_1^i, ..., u_{N_p}^i\right\}$ est initialisé de la manière suivante : $u^i = \{u_i, ... , u_i\}$.

Une sous-opération 1073 comprend faire varier les valeurs des particules $x^i$ de l'éolienne $11_i$. Ici, on fait varier les valeurs des particules $x^i$ selon des équations d'Optimisation par Essaim de Particules (ou PSO pour « *Particle Swarm Optimisation* »). De telles équations sont connues en tant que telles et par exemple décrite dans « R. Eberhart and J. Kennedy, "A new optimiser using particle swarm theory", in Micro Machine and Human Science, 1995. MHS'95., Proceedings of the Sixth International Symposium on. IEEE, 1995, pp. 39-43 ».

À l'issue de la sous-opération 1073, au cours d'une sous-opération 1075, l'éolienne $11_i$ transmet les données obtenues ($u^i$, $x^i$, $p^i$, $l^i$) aux éoliennes appartenant au groupe aval $E_i^{down}$. Chaque éolienne 11 transmet des données, au moins aux éoliennes 11 appartenant à son groupe aval $E^{down}$. Les données transmises comprennent les variables calculées telles que les particules xk, les meilleures valeurs personnelles $p_k^i$ et les meilleures valeurs locales $l_k^i$ . Les transmissions de données sont représentées par exemple en figures 8 et 9. L'éolienne 11i reçoit donc aussi des données si elle appartient à un groupe aval $E_j^{down}$ d'éoliennes voisines $11_j$. L'éolienne $11_i$ reçoit des données analogues de la part d'éoliennes voisines $11_j$ appartenant au groupement $E_i^{up}$, y compris de la part de l'éolienne de tête $E_i^{top}$.

Au cours d'une sous-opération 1075, l'éolienne $11_i$ compose ses solutions avec celles des éoliennes voisines du groupe amont $E_i^{up}$. Les vecteurs solutions suivants sont par exemple générés :

- Les particules $x^i$ de l'éolienne $11_i$ considérée avec les meilleures valeurs locales $l^j$ des éoliennes du groupe amont $E_i^{up}$ respectif, et les meilleures valeurs personnelles $p^i$ de l'éolienne $11_i$ considérée avec les meilleures valeurs locales $l^j$ des éoliennes du groupe amont $E_i^{up}$. Cela peut s'exprime de la manière suivante :

$$\begin{cases} \left(x_1^i, l_1^j \; \forall j \in E_i^{up}\right), ..., \left(x_{N_p}^i, l_{N_p}^j \; \forall j \in E_i^{up}\right) & (IV) \\ \left(p_1^i, l_1^j \; \forall j \in E_i^{up}\right), ..., \left(p_{N_p}^i, l_{N_p}^j \; \forall j \in E_i^{up}\right) & (V) \end{cases}$$

- Les particules $x^j$ des éoliennes du groupe amont $E_i^{up}$ avec les autres meilleures valeurs locales $l^j$ du voisinage, et les meilleures valeurs personnelles $p^j$ des éoliennes du groupe amont $E_i^{up}$ avec les autres meilleures valeurs locales $l^j$ du voisinage. Cela peut s'exprime de la manière suivante (avec $\forall k \in E_i^{up}$) :

$$\begin{cases} \left(x_1^k, l_1^i, l_1^j \; \forall j \in E_i^{up} \, et \, j \neq k\right), ..., \left(x_{N_p}^k, l_{N_p}^i, l_{N_p}^j \; \forall j \in E_i^{up} \, et \, j \neq k\right) \; (VI) \\ \left(p_1^k, l_1^i, l_1^j \; \forall j \in E_i^{up} \, et \, j \neq k\right), ..., \left(p_{N_p}^k, l_{N_p}^i, l_{N_p}^j \; \forall j \in E_i^{up} \, et \, j \neq k\right) \; (VII) \end{cases}$$

Au cours d'une sous-opération 1077, des vecteurs de résultats intermédiaires de la sous-opération 1075 sont générés à l'aide d'une fonction de puissance donnée par l'équation I ci-avant. Le calcul de puissance est décrit plus en détail ci-après. Il en résulte les vecteurs des résultats intermédiaires suivants :

- Le calcul pour l'éolienne $11_i$ des valeurs de puissance $P^i$ et du vent $u^i$ associées aux vecteurs (IV), c'est-à-dire respectivement $P_x^i = \{P_{1,x}^i, ..., P_{N_p,x}^i\}$ et $u^i = \left\{u_1^i, ..., u_{N_p}^i\right\}$.

- Le calcul des valeurs de puissance associées aux vecteurs (V), (VI) et (VII), c'est-à-dire respectivement :

$$P_p^i = \left\{P_{1,p}^i, ..., P_{N_p,p}^i\right\},$$

$$\forall j \in E_i^{up} : P_x^{i,j} = \{P_{1,x}^{i,j}, ..., P_{N_p,x}^{i,j}\},$$

$$P_p^{i,j} = \left\{P_{1,p}^{i,j}, ..., P_{N_p,p}^{i,j}\right\}.$$

Au cours d'une sous-opération 1079, l'éolienne $11_i$ transmet les valeurs de puissance calculées ($P_x^{i,j}, P_p^{i,j}$) aux éoliennes $11_j$ appartenant au groupe amont correspondant $E_i^{up}$, y compris l'éolienne de tête $E_i^{top}$. Chaque éolienne 11 transmet des données, au moins aux éoliennes 11 appartenant à son groupe amont $E^{up}$. Les données transmises comprennent la valeur de la fonction de puissance P, calculée en des points particuliers, donnée par l'équation (I). L'éolienne $11_i$ reçoit donc aussi des données si elle appartient à un groupe amont $E_j^{up}$ d'éoliennes voisines $11_j$. L'éolienne $11_i$ reçoit des données analogues de la part d'éoliennes voisines $11_j$ appartenant au groupe aval $E_i^{down}$.

Au cours d'une sous-opération 1081, la fonction de pertinence (« *fitness function* ») est mise en oeuvre (voir ci-après). Pour chaque particule $x_k^i$, la valeur de la meilleure valeur personnelle $p_k^i$ correspondante est mise à jour avec la valeur de la particule $x_k^i$ si cette dernière est meilleure. Cela peut prendre la forme de la sous-routine suivante :

*Mise à jour de $p^i$ :*

$$for \; k = 1 : N_p$$

$$if \; x_k^i \; est \; une \; solution \; meilleure \; que \; p_k^i$$

$$Mise \; à \; jour \; p_k^i = x_k^i \; ; \; nouvelle \; fitness_{k,p}^i = \; fitness_{k,x}^i$$

$$else$$

$$nouvelle \; fitness_{k,p}^i = \; fitness_{k,p}^i$$

$$end$$

$$end$$

Dans une sous-opération 1083, les valeurs locales $l^i$ sont mises à jour à leur tour avec les meilleures valeurs parmi les valeurs personnelles $p^i$ selon leur voisinage. Les nouvelles valeurs locales sont référencées $l^{i,new}$. Cela peut prendre la forme de la sous-routine suivante :

$$\textbf{for } k = 1 : N_p$$

$$l_k^{i,new} = \text{meilleure } p_k^i \text{ parmi les } p_k^i \in N_k \; ;$$

$$\textbf{end}$$

$$l^{i,new} = \{l_1^{i,new}, \dots, l_{N_p}^{i,new}\}$$

Dans une sous-étape 1085, les meilleures valeurs locales sont amorties, par exemple selon l'équation suivante :

$$l^{i,amorti} = l^i + \beta(l^{i,new} - l^i),$$

avec $\beta \in (0,1]$ étant un paramètre de réglage.

La demanderesse a constaté une meilleure performance du procédé, notamment en améliorant la convergence de l'algorithme, par la mise en oeuvre de l'amortissement de la sous-étape 1085. Jouer sur le paramètre de réglage $\beta$ permet de résoudre des problèmes de convergence.

Puis, le compteur d'itérations est incrémenté de 1 et l'itération est de nouveau mise en oeuvre en commençant par la sous-opération 1071.

Pour chaque itération de l'algorithme DPSO proposé, chaque éolienne $11_i$ communique deux fois avec les éoliennes $11_j$ voisines. L'évaluation au moyen de la fonction de puissance est mise en oeuvre $2*N_p*(|E_i^{up}| + 1)$ fois, avec $|E_i^{up}|$ étant le nombre d'éoliennes appartenant au groupe de voisin amont de l'éolienne $11_i$. Un faible nombre $N_p$ de particules et un faible nombre d'itération (iteration_max) sont suffisant à la mise en oeuvre de l'algorithme DPSO pour obtenir une convergence rapide et un résultat pertinent. Dans l'exemple du parc « Horn Rev », comprenant 80 éoliennes (N = 80), 5 particules ($N_p \cong 5$) et environ 50 itérations (iteration_max $\cong 50$), des résultats satisfaisants sont obtenus.

On décrit ici le calcul de la fonction de puissance pour le $q^{ème}$ vecteur du jeu de vecteurs IV définit ci-avant. Le calcul est similaire pour les jeux de vecteurs V, VI et VII.

Pour l'éolienne $11_i$, la réduction de vent $\delta_{uij}$ causée par chaque éolienne $11_j$ appartenant au groupe voisin en amont $E_i^{up}$ par effet de sillage est calculée.

Parmi les vecteurs $u^j$ reçus, le vecteur $u^{E_i^{top}}$ issu de l'éolienne de tête $E_i^{top}$ est retenu.

Avec $u_q^{E_i^{top}}$ la $q^{ème}$ composante de $u^{E_i^{top}}$, le vent de face est calculé selon la formule suivante :

$$u_i^q = u_q^{E_i^{top}} \times \left(1 - \sqrt{\sum_{j \in E_i^{up}} \delta_{u_{i,j}}^2}\right).$$

La $q^{\text{ème}}$ composante de la puissance de l'éolienne $11_i$ est calculée selon la formule suivante :

$$P_q^i = \frac{1}{2} \rho \pi R^2 {u_q^i}^3 C_{p,i}$$

On décrit ici la fonction de pertinence (ou « *fitness function* »). Une telle fonction est créée pour tenir compte de la puissance globale du parc 10 et des contraintes de puissance. Les contraintes sont prises en compte par une méthode connue appelée « *Deb's rule* », par exemple décrite dans « K. Deb, "An efficient constraint handling method for genetic algorithms", Computer methods in applied mechanics and engineering, vol. 186, no. 2, pp. 311-338, 2000 ». On décrit ici le calcul de la fonction de pertinence pour le $q^{\text{ème}}$ vecteur du jeu de vecteurs IV définit ci-avant. Le calcul est similaire pour les jeux de vecteurs V, VI et VII.

Pour l'éolienne $11_i$, la fonction de puissance agrégée est calculée selon la formule suivante :

$$F_q^i = - \left( P_q^i + \sum_{j \in E_i^{down}} P_q^{j,i} \right)$$

$P_q^{j,i}$ correspond à la puissance de l'éolienne j associée au vecteur q, calculée au niveau de l'éolienne j et transmise à l'éolienne i. Pour l'éolienne $11_i$, la fonction contrainte est calculée selon la formule suivante :

$$G_q^i = P_q^i - P_{n,\vartheta}$$

La valeur $P_{n,\vartheta}$ correspond à la limite maximale de puissance en sortie de l'éolienne $11_i$, par exemple comme décrit précédemment la plus faible des valeurs parmi la puissance électrique nominale en sortie $P_n$ de ladite éolienne $11_i$ et le quotient de la puissance électrique maximale $P_{max}^{tot}$ à fournir en sortie du parc 10 par le nombre N d'éoliennes de l'ensemble du parc 10.

Pour chaque éolienne $11_i$, la fonction de pertinence est fixée égale à la fonction de contrainte si cette dernière est supérieure à 0, et égale à la fonction de puissance agrégée sinon. Cela peut s'exprimer par la routine suivante :

**if** $G_q^i > 0$

$$fitness_q^i = G_q^i;$$

**else**

$$fitness_q^i = F_q^i;$$

**End**

Dans une opération 109, on génère des signaux de commande. Chaque signal de commande est destiné à une éolienne 11 respective du parc 10. Le signal de commande est par exemple généré par un module de commande de chaque éolienne 11. Le signal de commande est fonction de la valeur de variable de commande $\alpha_i$ obtenue à l'issue de l'opération 107 par un ensemble de moyens informatiques, ici sous la forme d'un module de calcul.

La demanderesse a mené des essais en simulation du procédé proposé : il a été constaté des gains de puissance sur l'ensemble du parc pouvant atteindre 20% par rapport au fonctionnement *« greedy »*. En outre, l'architecture du système est aisément adaptable à de nombreux parcs d'éoliennes. La complexité des calculs et donc la dynamique du pilotage est sensiblement indépendante de la taille du système (du nombre d'éoliennes). De tels parcs forment une installation résiliente au sens qu'un défaut d'une unité de calcul ne compromet pas le fonctionnement de l'ensemble du parc.

Les essais précédents ont été menés en référence au parc éolien Horn Rev. Le procédé peut être transposé à d'autres parcs. Dans le tableau ci-dessous sont donnés quelques exemples de situations testées par la demanderesse.

Les valeurs sont données selon le formalisme suivant : ($\varepsilon_{int}$, $\min_i(|E_i^{up}| + |E_i^{down}|)$, $\max_i(|E_i^{up}| + |E_i^{down}|)$). Le paramètre d'interaction $\varepsilon_{int}$ est indiqué en multiple de la valeur du rayon du rotor des éoliennes (R). Dans les situations données ici, les éoliennes sont implantées régulièrement selon un quadrillage de forme losange. Les parcs comprennent N éoliennes ($\sqrt{N}$ éoliennes par côté). Trois directions du vent $\vartheta^W$ ont été considérées. $\min_i(|E_i^{up}| + |E_i^{down}|)$ et $\max_i(|E_i^{up}| + |E_i^{down}|)$ représentent respectivement le nombre minimum et maximum d'éoliennes qui appartiennent au voisinage d'une éolienne quelconque du parc considéré. Ces nombres sont liés à la géométrie du parc et à la valeur du paramètre d'interaction $\varepsilon_{int}$ sélectionnée. Ces deux extremums forment des indicateurs du niveau de communication nécessaire à la convergence de l'algorithme. Pour toutes les configurations de parcs testées, la distance entre les éoliennes est considérée égale à celle du parc Horn Rev, c'est-à-dire 7D selon chacune des deux directions principales d'alignement des éoliennes (figure 4).

| $\vartheta^W$/N | 25 | 49 | 81 | 169 |
|---|---|---|---|---|
| 0° | (5,4,4) | (9,6,9) | (11,7,13) | (18,15,34) |
| 45° | (5,0,4) | (6,0,7) | (7,0,11) | (10,1,24) |
| 90° | (1,4,4) | (1,6,6) | (1,8,8) | (1,12,12) |

Pour les essais, une valeur 5 est attribuée à $N_p$, et un nombre d'itérations de 50 est fixé (*max_iter* = 50). Les résultats ont montré que le nombre de particules choisi influence peu la convergence de l'algorithme, et que l'algorithme a de bonnes performances en rapidité de convergence.

Le procédé peut être mis en oeuvre au moyen d'équipements informatique usuellement disponibles dans le commerce, notamment de cartes de processeurs classiques. Le procédé peut ainsi être mis en oeuvre dans le cadre d'un pilotage en temps réel des éoliennes d'un parc. Des mesures en temps réel du vent par des moyens connus en tant que tels (par exemple des anémomètres répartis sur le parc) peuvent alimenter le procédé en données d'entrée actualisées.

Jusqu'ici, le procédé a été décrit dans le contexte d'une application sur un parc existant dont les paramètres physiques sont fixés. Le procédé peut aussi être mis en oeuvre par simulation. Par exemple, lors de la conception d'un parc éolien, le procédé peut être mis en oeuvre avec, en données d'entrée, des données météorologiques observées et diverses implantations d'éoliennes possibles. En comparant les résultats, notamment la capacité des modules de calcul à converger et les puissances de sortie obtenues, de telles simulations peuvent aider à sélectionner des plans d'implantations parmi plusieurs possibles, par exemple pour réduire les effets de sillage.

L'invention vise aussi un système de plusieurs éoliennes, ou parc, aptes à coopérer les unes avec les autres selon le procédé.

**Revendications**

1. Procédé de commande d'un parc (10) d'éoliennes (11) mis en oeuvre par une pluralité d'ensembles de moyens informatiques, chaque ensemble étant associé à une éolienne (11$_i$) respective et étant distinct des autres ensembles, le procédé comprenant :

a) recevoir (101) en entrée de chaque ensemble associé à une éolienne (11$_i$), des données relatives à une vitesse du vent (u$_i$), une orientation du vent ($\vartheta$) et une puissance électrique maximale ($P_{max}^{tot}$) à fournir en sortie du parc (10),
b) attribuer à chaque éolienne (11$_i$) une valeur cible de puissance électrique à fournir en sortie équivalente à la plus faible des valeurs parmi la puissance électrique nominale en sortie (P$_n$) de ladite éolienne (11$_i$) et le quotient de la puissance électrique maximale (P$_{max}^{tot}$) à fournir en sortie du parc (10) par le nombre d'éoliennes (N) de l'ensemble du parc,
c) déterminer (105), au niveau des ensembles de moyens informatiques de chaque éolienne (11$_i$) en fonction de l'orientation du vent ($\vartheta$) et en considérant la nacelle de l'éolienne (11$_i$) orientée face au vent :

- un groupe aval ($E_i^{down}$) comprenant les éoliennes voisines ($11_j$) de ladite éolienne ($11_i$) dont le comportement est influencé par ladite éolienne ($11i$) par effet de sillage,
- un groupe amont ($E_i^{up}$) comprenant les éoliennes voisines ($11_j$) de ladite éolienne ($11_i$) influençant le comportement de ladite éolienne ($11_i$) par effet de sillage, et
- une éolienne de tête ($E_i^{top}$) parmi le groupe amont ($E_i^{up}$), l'éolienne de tête étant définie comme dépourvue d'éolienne influençant son comportement par effet de sillage ;

d) établir une communication entre les éoliennes desdits groupes ;
e) mettre en oeuvre un algorithme (107) d'optimisation par essaim de particules (PSO) pour chacune des éoliennes ($11_i$) de manière distribuée sur chacun des ensembles de moyens informatiques, afin de converger vers une valeur de variable de commande ($\alpha_i$) destinée à ladite éolienne ($11_i$),
ledit algorithme comportant au niveau de chaque éolienne ($11_i$):

i. associer à chaque éolienne ($11_i$) un nombre $N_p$ de valeurs possibles de ladite variable de commande $\alpha_i$ appelées particules $x^i$, auxquelles sont associées une meilleure valeur personnelle et une meilleure valeur locale,
ii. initialiser lesdites particules $x'$ (1071), en fixant leurs valeurs aléatoirement dans une plage de valeurs prédéfinie,
iii. initialiser un vecteur vitesse amont du vent $u^i$ avec la valeur de vitesse du vent mesurée,
iv. faire varier les valeurs des particules $x^i$ de l'éolienne ($11_i$) selon des équations d'Optimisation par Essaim de Particules (1073),
v. - transmettre (1075, 1079) les données obtenues ($u^i, x^i, p^i, l^i$) par l'éolienne ($11_i$) aux éoliennes appartenant au groupe aval $E_i^{down}$ de cette éolienne,,
vi. - recevoir des données analogues de la part d'éoliennes appartenant au groupe amont $E_i^{up}$ de ladite éolienne ($11_i$), y compris de la part de l'éolienne de tête $E_i^{top}$ ,
vii. composer les solutions des éoliennes ($11_i$) avec les solutions des éoliennes voisines du groupe amont $E_i^{up}$;

viii. générer des vecteurs de résultats intermédiaires de puissances ( $P_x^{i,j}, P_p^{i,j}$ ) à l'aide d'une fonction de puissance,

ix. transmettre les valeurs de puissance calculées ( $P_x^{i,j}, P_p^{i,j}$ ) aux éoliennes du groupe amont,
x. mettre en oeuvre une fonction de pertinence et mettre à jour les valeurs de meilleure valeur personnelle $p_k^i$ avec les valeurs de particules $x_k^i$ si ces dernières sont meilleures et mettre à jour les valeurs locales $l^i$ avec les meilleures valeurs parmi les valeurs personnelles $p^i$ selon leur voisinage,

f) réitérer l'algorithme en sorte d'obtenir une convergence de valeur d'une variable de commande ($\alpha_i$) des éoliennes ($11_i$),
g) générer (109) des signaux de commande, chacun des signaux de commande étant destiné à une éolienne ($11_i$) respective du parc (10) et fonction de la valeur de variable de commande ($\alpha_i$), obtenue par l'ensemble de moyens informatiques correspondant, à l'issue des itérations de l'algorithme.

**2.** Procédé selon la revendication 1, dans lequel la détermination des groupes est réalisée en fonction d'un paramètre d'interaction réglable ($\varepsilon_{int}$) commun à l'ensemble du parc (10), le choix de la valeur dudit paramètre permettant à un opérateur de régler un compromis entre un niveau de qualité d'optimisation et une vitesse de convergence de l'algorithme.

**3.** Procédé selon l'une des revendications précédentes, comprenant en outre la génération d'un signal de commande de l'orientation de lacet ($\gamma$) de chaque éolienne (11), ledit signal étant généré en fonction de l'orientation du vent ($\vartheta$), de sorte que chaque éolienne s'oriente sensiblement face au vent et indépendamment des résultats de l'algorithme d'optimisation.

**4.** Procédé selon l'une des revendications précédentes, dans lequel la mise en oeuvre de l'algorithme inclut la mise en oeuvre d'un modèle de puissance du parc et un modèle de l'effet de sillage.

**5.** Système d'au moins deux éoliennes, chacune équipée d'un ensemble de moyens informatiques agencés pour coopérer les uns avec les autres et mettre en oeuvre le procédé selon l'une des revendications précédentes.

6. Support d'enregistrement non transitoire lisible par un ordinateur sur lequel est enregistré un programme comprenant des instructions pour la mise en oeuvre du procédé selon l'une des revendications 1 à 4.

7. Programme informatique comportant des instructions pour la mise en oeuvre du procédé selon l'une des revendications 1 à 4, lorsque ce programme est exécuté par un processeur.

**Patentansprüche**

1. Verfahren zur Steuerung eines Parks (10) von Windturbinen (11), das von einer Vielzahl von Anordnungen von Computermitteln implementiert wird, wobei jede Anordnung einer jeweiligen Windturbine (11i) zugeordnet und von den anderen Anordnungen verschieden ist, wobei das Verfahren umfasst:

a) Empfangen (101) am Eingang jeder Anordnung, die einer Windturbine (11i) zugeordnet ist, von Daten, die sich auf eine Windgeschwindigkeit (ui), eine Windrichtung ($\vartheta$) und eine maximale elektrische Leistung (Ptot/max) beziehen, die am Ausgang des Parks (10) zu liefern ist,

b) Zuordnen eines Zielwertes für die am Ausgang zu liefernde elektrische Leistung zu jeder Windturbine (11i), der dem niedrigeren Wert aus der nominalen elektrischen Ausgangsleistung (Pn) der Windturbine (11i) und dem Quotienten aus der maximalen elektrischen Leistung (Ptot/max), die am Ausgang des Parks (10) zu liefern ist, und der Anzahl der Windturbinen (N) des gesamten Parks entspricht,

c) Bestimmen (105), auf der Ebene der Anordnungen von Computermitteln jeder Windturbine (11i) basierend auf der Windrichtung ($\vartheta$) und unter Berücksichtigung der dem Wind zugewandten Gondel der Windturbine (11i):

- eine stromabwärtige Gruppe ($E_i^{down}$), die die benachbarten Windturbinen (11j) der Windturbine (11i) umfasst, deren Verhalten durch die Windturbine (11i) durch den Nachlaufeffekt beeinflusst wird,
- eine stromaufwärtige Gruppe ($E_i^{up}$), die die benachbarten Windturbinen (11j) der Windturbine (11i) umfasst, die das Verhalten der Windturbine (11i) durch den Nachlaufeffekt beeinflussen, und
- eine führende Windturbine ($E_i^{top}$) aus der stromaufwärtigen Gruppe ($E_i^{up}$), wobei die führende Windturbine definiert ist als frei von Windturbinen, die ihr Verhalten durch den Nachlaufeffekt beeinflussen;

d) Herstellen einer Kommunikation zwischen den Windturbinen der Gruppen;

e) Implementieren eines Algorithmus (107) zur Partikelschwarmoptimierung (PSO) für jede der Windturbinen (11i) auf verteilte Weise auf jede der Anordnungen von Computermitteln, um gegen einen Wert der Steuervariablen ($\alpha i$) für die Windturbine (11i) zu konvergieren, wobei der Algorithmus auf der Ebene jeder Windturbine (11i) umfasst:

i. Zuordnen einer Anzahl $N_p$ von möglichen Werten der Steuervariablen $\alpha i$ zu jeder Windturbine (11i), die als Partikel x' bezeichnet werden, denen ein bester persönlicher Wert und ein bester lokaler Wert zugeordnet sind,

ii. Initialisieren der Partikel $x^i$ (1071), indem ihre Werte zufällig in einem vordefinierten Bereich von Werten festgelegt werden,

iii. Initialisieren eines stromaufwärtigen Windgeschwindigkeitsvektors u' mit dem gemessenen Windgeschwindigkeitswert,

iv. Variieren der Werte der Partikel x' der Windturbine (11i) gemäß Gleichungen zur Optimierung durch Partikelschwarm (1073),

v. Übertragen (1075, 1079) der von der Windturbine (11i) erhaltenen Daten ($u^i$, $x^i$, $p^i$, $l^i$) an Windturbinen, die zur stromabwärtigen $E_i^{down}$-Gruppe dieser Windturbine gehören,

vi. Empfangen von analogen Daten von Windturbinen, die zur stromaufwärtigen Gruppe $E_i^{up}$ dieser Windturbine (11i) gehören, einschließlich der führenden Windturbine $E_i^{top}$,

vii. Zusammenstellen der Lösungen der Windturbinen (11i) und der Lösungen der benachbarten Windturbinen der stromaufwärtigen Gruppe $E_i^{up}$;

viii. Erzeugen von Vektoren von Leistungszwischenergebnissen ($P_x^{i,j}$, $P_p^{i,j}$) mithilfe einer Leistungsfunktion,

ix. Übertragen der berechneten Leistungswerte ($P_x^{i,i}$, $P_p^{i,j}$) an die Windturbinen der stromaufwärtigen Gruppe,

x. Implementieren einer Relevanzfunktion und Aktualisieren der besten persönlichen Werte $p_k^i$, mit den Partikelwerten $x_k^i$, wenn letztere besser sind, und Aktualisieren der lokalen Werte $l^i$ mit den besten Werten unter den persönlichen Werten $p^i$ gemäß ihrer Nachbarschaft,

f) Wiederholen des Algorithmus, so dass eine Konvergenz der Werte einer Steuervariablen ($\alpha_i$) der Windturbinen (11i) erreicht wird,

g) Erzeugen (109) von Steuersignalen, wobei jedes der Steuersignale für eine jeweilige Windturbine (11i) des Parks (10) bestimmt ist und von dem Wert der Steuervariablen ($\alpha i$) abhängt, der durch die entsprechende Anordnung von Computermitteln nach den Iterationen des Algorithmus erhalten wurde.

2. Verfahren nach Anspruch 1, wobei die Bestimmung der Gruppen basierend auf einem einstellbaren Interaktionsparameter ($\varepsilon_{int}$) erfolgt, der dem gesamten Park (10) gemeinsam ist, wobei die Wahl des Wertes des Parameters es einem Bediener ermöglicht, einen Kompromiss zwischen einem optimierten Qualitätsniveau und einer Konvergenzgeschwindigkeit des Algorithmus einzustellen.

3. Verfahren nach einem der vorhergehenden Ansprüche, welches ferner die Erzeugung eines Steuersignals für die Gierausrichtung (y) jeder Windturbine (11) umfasst, wobei das Signal basierend auf der Windrichtung ($\vartheta$) erzeugt wird, so dass sich jede Windturbine im Wesentlichen gegen den Wind und unabhängig von den Ergebnissen des Optimierungsalgorithmus ausrichtet.

4. Verfahren nach einem der vorhergehenden Ansprüche, wobei die Implementierung des Algorithmus die Implementierung eines Leistungsmodells des Parks und eines Modells des Nachlaufeffekts beinhaltet.

5. System aus wenigstens zwei Windturbinen, die jeweils mit einer Anordnung von Computermitteln ausgestattet sind, die dazu angeordnet sind, miteinander zu kooperieren und das Verfahren nach einem der vorhergehenden Ansprüche durchzuführen.

6. Computerlesbares, nicht transitorisches Aufzeichnungsmedium, auf dem ein Programm aufgezeichnet ist, das Anweisungen zur Durchführung des Verfahrens nach einem der Ansprüche 1 bis 4 umfasst.

7. Computerprogramm, umfassend Anweisungen zur Durchführung des Verfahrens nach einem der Ansprüche 1 bis 4, wenn das Programm von einem Prozessor ausgeführt wird.

**Claims**

1. A method for controlling a park (10) of wind turbines (11) implemented by a plurality of sets of computer means, each set being associated with a respective wind turbine (111) and being distinct from the other sets, the method comprising:

a) receiving (101) at the input of each set associated with a wind turbine (11$_i$, data relating to a wind speed (ui), a wind orientation (3) and a maximum electrical power ( $P_{max}^{tot}$ ) to be supplied at the output the park (10),
b) assigning to each wind turbine (11$_i$) a target value of electrical power to be provided at the output which is equivalent to the lowest of the values among the nominal electrical power output ($P_n$) of said wind turbine (11$_i$) and the quotient of the maximum electrical power ($P_{max}^{tot}$) to be provided at the output of the park (10) by the number of wind turbines (N) of the entire park,
c) determining (105), at the sets of computer means of each wind turbine (11$_i$) depending on the orientation of the wind (3) and considering the nacelle of the wind turbine (11$_i$) oriented facing the wind:

- a downstream group ($E_i^{down}$) comprising the neighbouring wind turbines (11$_j$) of said wind turbine (111) the behaviour of which is influenced by said wind turbine (111) by wake effect,
- an upstream group ($E_i^{up}$) comprising the neighbouring wind turbines (11$_j$ of said wind turbine (111) influencing the behaviour of said wind turbine (111) by wake effect, and
- a leading wind turbine ($E_i^{top}$) among the upstream group ($E_i^{up}$), the leading wind turbine being defined as devoid of wind turbine influencing its behaviour by wake effect;

d) establishing communication between the wind turbines of said groups;
e) implementing a particle swarm optimisation (PSO) algorithm (107) for each of the wind turbines (111) in a distributed manner on each of the sets of computing means, in order to converge towards a control variable

value ($\alpha_i$) intended for said wind turbine ($11_i$),
said algorithm including at each wind turbine ($11_i$):

    i. associating with each wind turbine ($11_i$) a number $N_p$ of possible values of said control variable $\alpha_i$ called particles $x^i$, with which a best personal value and a best local value are associated,
    ii. initialising said particles $x^i$ (1071), by setting their values randomly in a predefined range of values,
    iii. initialising an upstream wind speed vector $u^i$ with the measured wind speed value,
    iv. varying the values of the particles $x^i$ of the wind turbine ($11_i$) according to Particle Swarm Optimisation equations (1073),
    v. - transmitting (1075, 1079) the data obtained ($u^i$, $x^i$,$p^i$,$l^i$) by the wind turbine ($11_i$) to the wind turbines belonging to the downstream group $E_i^{down}$ of this wind turbine,
    vi. - receiving similar data from wind turbines belonging to the upstream group $E_i^{up}$ of said wind turbine ($11_i$), including from the leading wind turbine $E_i^{top}$,
    vii. composing the solutions of the wind turbines ($11_i$) with the solutions of the neighbouring wind turbines of the upstream group $E_i^{up}$;

    viii. generating vectors of intermediate power results ( $P_x^{i,j}$ , $P_p^{i,j}$ ) using a power function,

    ix. transmitting the calculated power values ( $P_x^{i,j}$ , $P_p^{i,j}$ ) to the wind turbines of the upstream group,

    x. implementing a relevance function and updating the values of best personal value $p_k^i$ with the particle values xk if the latter are better and updating the local values $l^i$ with the best values among the personal values $p^i$ according to their neighbourhood,

    f) repeating the algorithm in order to obtain a convergence of the value of a control variable ($\alpha_i$) of the wind turbines ($11_i$),
    g) generating (109) control signals, each of the control signals being intended for a respective wind turbine ($11_i$) of the park (10) and dependent on the value of the control variable ($\alpha_i$), obtained by the set of corresponding computer means, at the end of the repetitions of the algorithm.

2. Method according to claim 1, wherein the determination of the groups is carried out based on an adjustable interaction parameter ($\varepsilon_{int}$) common to the entire park (10), the choice of the value of said parameter allowing an operator to settle a compromise between an optimisation quality level and a convergence speed of the algorithm.

3. Method according to one of the preceding claims, further comprising the generation of a control signal for the yaw orientation ($\gamma$) of each wind turbine (11), said signal being generated according to the wind orientation ($\vartheta$), so that each wind turbine is oriented substantially towards the wind and independently of the results of the optimisation algorithm.

4. Method according to one of the preceding claims, wherein the implementation of the algorithm includes the implementation of a park power model and a wake effect model.

5. System of at least two wind turbines, each equipped with a set of computer means arranged to cooperate with each other and implement the method according to one of the preceding claims.

6. Non-transitory recording medium readable by a computer on which is recorded a program comprising instructions for implementing the method according to one of claims 1 to 4.

7. Computer program including instructions for implementing the method according to one of claims 1 to 4, when this program is executed by a processor.

**FIG. 1**

**FIG. 2**

**FIG. 3**

FIG. 4

FIG. 6

FIG. 5

FIG. 7

FIG. 8

**FIG. 9**

EP 3 438 448 B1

## RÉFÉRENCES CITÉES DANS LA DESCRIPTION

**Documents brevets cités dans la description**

- US 2013300115 A

**Littérature non-brevet citée dans la description**

- Active power dispatch method for a wind farm central controller considering wake effect. **J. TIAN ; C. SU ; M. SOLTANI ; Z. CHEN.** Industrial Electronics Society, IECON 2014-40th Annual Conférence of the IEEE. IEEE, 2014, 5450-5456
- **J. PARK ; K. H. LAW.** A data-driven, cooperative wind farm control to maximize the total power production. *Applied Energy,* 2016, vol. 165, 151-165
- **PARK ; K. H. LAW.** Cooperative wind turbine control for maximizing windfarm power using sequential convex programming. *Energy Conversion and Management,* 2015, vol. 101, 295-316
- **A. H. AGUIRRE ; A. M. ZAVALA ; E. V. DIHARCE ; S. B. RIONDA.** Copso: Constrained optimization via pso algorithm. *Center for Research in Mathematics (CIMAT),* 2007
- A new optimiser using particle swarm theory. **R. EBERHART ; J. KENNEDY.** Micro Machine and Human Science, 1995. MHS'95., Proceedings of the Sixth International Symposium. IEEE, 1995, 39-43
- **K. DEB.** An efficient constraint handling method for genetic algorithms. *Computer methods in applied mechanics and engineering,* 2000, vol. 186 (2), 311-338